(19) Europäisches Patentamt

European Patent Office

Office européen des brevets

(11) EP 1 537 785 A1

## (12) EUROPEAN PATENT APPLICATION

(43) Date of publication:
08.06.2005 Bulletin 2005/23

(51) Int Cl.$^7$: **A23C 19/14**, A23C 19/16

(21) Application number: 03078790.7

(22) Date of filing: 02.12.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **CSK Food Enrichment B.V.**
**8901 BA Leeuwarden (NL)**

(72) Inventors:
• **Kevelam, Jan**
**8901 BA Leeuwarden (NL)**

• **Koopmans, Wieger J.**
**8901 BA Leeuwarden (NL)**
• **Visschedijk, Paul J.**
**8901 BA Leeuwarden (NL)**

(74) Representative: **Huygens, Arthur Victor**
**Octrooibureau Huygens,**
**P.O. Box 86**
**3400 AB Ijsselstein (NL)**

## (54) Cheese coating compositions with low water vapour permeability

(57) The invention relates to use of compositions for the coating of cheese which comprises a water-borne polymer dispersion comprising (a) a copolymer comprising a vinylic ester of a saturated hydrocarbon, at least one of a maleic or fumaric ester, and a stabilising monomer, (b) a protective colloid, and (c) a nonionic emulsifier, said composition having a water vapour permeability ranging from 1-140 g/m$^2$.24h. Advantages of the compositions include higher efficiency of the cheese ripening process by reducing evaporative water loss and/or the possibility to store cheese under conditions at lower relative humidity (i.e. having less risk of microbial growth on the exterior of the cheese) whilst keeping the moisture loss to an acceptable value. Also claimed is cheese provided with such a new coating composition.

**Description**

The present invention relates to a new composition for coating food and food ingredients, in particular cheese, and the use of such a composition. More in particular, the invention relates to a protective cheese coating allowing control of evaporative water loss from the cheese.

It is well known in the art that for a controlled ripening and protection of hard and semi-hard cheeses such as Dutch Gouda, the cheeses are usually treated with a dispersion which upon drying forms a protective film around the cheese. Such a coating fulfils essentially the following demands:

- protection of the cheese
- prevention of formation of cracks during ripening
- carrier of fungicides
- cosmetic reasons: colour, avoiding contamination, etc.

The processing of cheese usually involves applying aqueous dispersions of polymers, in particular copolymers of vinyl acetate and di-(n-butyl) maleinate, having typically a solids content of between 35 and 48 wt%. The relatively viscous dispersion is generally either applied automatically by a coating machine, or manually, with a sponge or the like.

A common coating procedure involves covering the sides and the top half of the cheese immediately after leaving the brine bath, then after 48 hours turning the cheese and treating the remaining part. This process of treating the sides and one half of the cheese is carried out at t = 4, 6, 9, 12, and 15 days and thereafter at larger time intervals depending on the type of cheese, storage conditions and, possibly, other factors. Other coating procedures with different time intervals may also be applied.

After application of this material to the cheese-rind, a film is formed by the drying of the coating material. Under storage-house conditions (temperature and relative humidity, RH) a film is usually formed within 24 hours.

A major drawback of the application of the current commercially available cheese coatings such as CesKa®-coAt WL (CSK Food Enrichment BV, Leeuwarden, the Netherlands) (hereinafter referred to as CESKA WL) is the relatively high loss of water out of the cheese. Under practical conditions (RH = 85% and T = 12-14°C), 10-12% of the cheese weight can be lost in 10-12 weeks of ripening due to the evaporation of water out of the cheese.

To prevent excessive evaporative loss of water from the cheese during ripening, the relative humidity at storage is already high (>80%). Under these storage conditions, an excess of mould growth may occur which then frequently results in serious adverse effects; sometimes mould growth is so excessive that the cheese can not be sold for consumption.

It is also known in the art that evaporative water loss can be blocked by applying substances such as paraffin on top of the cheese coating. Such a process is commonly applied for cheeses which are not sold directly. These materials have a major drawback in that ripening of the cheese which is necessary for a well-balanced cheese and optimal cheese taste, is blocked as well. This is clearly an unwanted situation.

The prior art discloses various alternatives to solve the problems of oxygen and water-permeability and/or lack of ripening, in particular by providing biodegradable coating compositions.

For example, Dutch Patent Application No. 9201710 discloses a cheese coating for semi-hard and hard cheese in the form of a polymeric layer, where the polymer is an edible, water-soluble and biologically degradable biopolymer, in particular a milk protein, viz. casein, a caseinate, or whey protein. Caseinates such as sodium caseinate or calcium caseinate are mentioned as preferred polymers. The cheese coating further comprises an optional plasticizer, such as glycerol, sorbitol or xylitol, to improve its flexibility.

Although such a cheese coating has certain advantages relative to cheese coatings which apply a plastic dispersion as the polymer, for example vinyl acetate-dibutyl maleinate copolymer (e.g. in CesKa®-coAt WL cheese coatings, a product of CSK food enrichment BV, Leeuwarden, the Netherlands), the oxygen and water permeability of the biodegradable composition was found to be greater than in compositions with a plastic dispersion.

Dutch Patent Application No. 9201820 describes an edible emulsion for the coating of foodstuff, such as cheese or sausages, which comprises 60-80 wt.% of water, 2-25 wt.% of oil or fat, 5-25 wt.% of protein and 0,1-3 wt. % of melt salt. The protein to be used which serves as an emulsifying agent is, according to the description, for example a milk protein or soy protein. In particular casein proteins are mentioned. The protein/fat ratio in the emulsion is usually between 2:1 and 1:2. No mention is made of the use of plasticizers.

U.S. Patent No. 5,543,164 discloses a method for preparing water-insoluble, edible coatings and - in particular - films for food items, wherein a denatured sugar-free protein solution is applied in a amount of 5 to 20 wt.%. The examples are illustrated by whey protein isolate, which substance contains more than 95% protein by definition. The films and the coating compositions may also contain further ingredients, such as lipids and plasticizers.

European Patent Application EP-A-0 465 801 describes an edible moisture barrier coating for edible foodstuff materials, such as cake, chocolate, almonds, pizzas, pastas and vegetables, comprising from 70 to 95% of an aqueous solution of a protein isolate, 30 to 5% of a mixture of a saturated lipid having a melting point above 30°C, and an emulsifyer containing an amount of 5 to 30 wt.% based on the weight of the lipid, and the emulsifier containing one or more diacetyl tartaric esters of monoglycerides.

Swiss Patent 419 816 discloses a process for the conservation of foodstuff by applying an aqueous emulsion comprising an elastic film-forming copolymer of two or more monomers, for example vinyl acetate, ethylene, and maleic esters. According to the disclosure this film on the one hand allows the breathing out of water and gases to some extent, but entirely blocks penetration from the outer atmosphere, thus substantially avoiding the harmful effects of bacteria and fungi, as well as loss of weight. However, this patent also teaches that avoiding loss of weight in hard-cheeses at storage is only accomplished by applying a plastic shrink-wrap on the coating dispersion.

German Auslegeschrift 1 142 269 discloses the use of polymer dispersions and/or solutions, in particular mixed polymerisates of vinyliden chloride having poor water vapour and/or gas permeability, to be applied on foodstuff, especially cheese, sausages, and ham, and inter alia resulting in a decrease of loss of weight of the foodstuff. However, no particulars of the chemical composition of the mixed polymerisates have been mentioned.

WO 00/49899 discloses biodegradable coatings and films for food products, obtained from cross-linked mixtures of insoluble caseinate and whey protein. The compositions may also contain a plasticizer and/or a polysaccharide.

WO 01/80658 (CSK Food Enrichment BV) discloses compositions for coating foodstuff, in particular cheese, which closely approach and sometimes even exceed the characteristics of cheese coatings in which a plastic dispersion is applied, and which are also edible and biologically degradable. These compositions comprise (a) 3-35% globular protein, optionally supplemented with one or more additional film forming components; (b) 5-55% sugar; (c) 3-20% fat; (d) 5-15% plasticizer; (e) 0-5% thickener; (f) 0-20% filler; (g) 0-5% fungicide; wherein the dry solids content of the aqueous emulsion is 20-60%.

WO 02/074856 (Clariant GmbH) discloses aqueous plastic material dispersions based on vinyl ester copolymers with a solid matter content of up to 80 wt.% and a minimum film-forming temperature of less than 20°C, which are essentially stabilised by ionic components. These vinyl ester copolymers contain at least one homopolymer or copolymer A and at least one homopolymer or copolymer B. Although the water-permeability of these coatings can be controlled satisfactorily, the dispersions do not seem to comply fully with official regulatory provisions in some countries. In addition, the viscosity of the disperions is rather low.

Non-prepublished International Patent Application No. PCT/EP 03/05841 describes the use of certain polymers disclosed in the said WO 02/075856 in coating compositions, especially for cheese. The coatings comprise a copolymer of vinyl acetate and ethylene as the prevalent monomer constituents, which have significantly lower water vapour permeability as compared with previous coatings, thus allowing the production of cheese having a relatively high water content, whilst the quality of the cheese, in particular the taste, is not adversely affected. Advantages of the disclosed compositions include improved texture of reduced fat cheese and the possibility to store cheese under conditions of lower relative humidity whilst keeping the moisture growth to an acceptable value.

Notwithstanding the above, there is still room for improvement, in particular in providing coatings which are biodegradable, have a controllable water-permeability and favourable processibility, and are fully compliant with food regulations.

Therefore, it is an object of the present invention to provide and apply a coating composition especially suitable for cheese coatings which has a significantly lower water permeability than the coating dispersions hitherto known. It is another object of the present invention that the coatings so obtained result in higher production yields of cheese either through the direct effect of reduced evaporative weight loss on the value of the cheese under storage conditions or through the effect that the cheese can be stored under conditions of lower relative humidity, thereby preventing excessive growth of moulds and yeasts while still keeping a satisfactory amount of water in the cheese, or through both.

Surprisingly, it has now been found that these objectives can be met by using, as the predominant raw material for the coating composition, a polymer dispersion with improved water permeability including a copolymer comprising vinyl acetate, dibutyl maleinate and a stabilising monomer, and variations thereof. Such polymer dispersions are disclosed in the concomitantly filed German patent application xxxxxxxxx of Celanese Emulsions GmbH, the contents of which are incorporated herein by reference. This patent application will be referred to hereinafter as the "Celanese DE application".

In accordance with one aspect of the present invention a composition for the coating of cheese is provided which comprises a water-borne polymer dispersion comprising (a) a copolymer comprising a vinylic ester of a saturated hydrocarbon, at least one of a maleic or fumaric ester, and a stabilising monomer, (b) a protective colloid, and (c) a nonionic emulsifier, said composition having a water vapour permeability ranging from 1-140 $g/m^2.24h$.

The coating compositions according to the present invention, which are also referred to hereinafter as "low vapour coatings" or "low vapour coating compositions", preferably have a water permeability of less than 100 $g/m^2.24h$, more preferably less than 75 $g/m^2.24h$. These coating compositions when applied on cheese reduce evaporative water loss.

In another aspect of the present invention the use of the above-defined coating composition is provided in the manufacturing of cheese, in particular semi-hard and hard cheese.

In still another aspect of the present invention there is provided cheese per se, when coated with a coating composition as defined above.

A suitable and preferred vinylic ester of a saturated hydrocarbon for use in the copolymer which forms part of the coating composition of the invention is vinyl acetate.

Suitable and preferred maleic esters for use in the copolymer component of the coating composition according to the invention are, for example, dibutyl maleinate and di-2-ethylhexyl maleinate, of which dibutyl maleinate is most preferred.

A suitable stabilising monomer is, for example, mono-2-ethylhexyl maleinate.

A suitable and preferred protective colloid for use in the coating composition is polyvinyl alcohol.

In a preferred embodiment of the present invention the novel coating composition as defined above is admixed with one or more additional ingredients to optimize and tailor the desired properties of the cheese in accordance with the requirements or wishes of the cheese manufacturers and consumers. Suitable additional ingredients include at least one of the commercially available coating compositions Mowilith SSK-1 KL or Mowilith SDM 4230 KL (ex Celanese Emulsions GmbH, Frankfurt am Main, Germany) or one or more individual ingredients thereof. Such preferred coating compositions result in a cheese coating composition with either tunable barrier properties or better resistance against mechanical forces or, preferably, both.

The various ingredients of the coating compositions according to the present invention are generally admixed within broad ranges which are not very critical and which can be determined by a person skilled in the art without undue experimentation, it being understood that the water vapour permeability of the final coating composition is always within the limits of the present invention as claimed. Varying the proportions of the ingredients usually will result in varying properties of the final coating. Accordingly, the compositions may be adapted in accordance with the wishes of the cheese manufacturers and/or the consumers. A typical low vapour base coating composition according to the present invention is within the following ranges: Brookfield viscosity (RVT, spindle 6, 20 rpm, room temperature) is between about 10 and 150 Poise, more preferably between 40 and 120 Poise. The solid matter content is between about 45 and 60% by weight, more preferably between 50% and 55% by weight. The content of maleic and/or fumaric esters such as dibutyl maleinate or di-2-ethylhexyl maleinate ranges from about 5% to 65%, more preferably from 45 to 55%. The content of vinylic esters of saturated aliphatic hydrocarbons such as vinyl acetate ranges from about 35 to 95%, more preferably from 40 to 60%. The content of stabilising monomer (e.g., mono-2-ethylhexylmaleinate) ranges from about 0.1 to 10%, more preferably from 3 to 8%. Optionally, further comonomers may be used. The sum of these monomers is 100% by weight. The content of protective colloid such as polyvinyl alcohol (e.g., PVOH 56-88) ranges from about 0,1 to 5 %, more preferably from 1-3%. The content of nonionic emulsifiers (such as Genapol O-120 and/or Genapol O-200) ranges from 0.1 to about 10% by weight.

The inventors have experienced that the higher the dibutyl maleate content, the lower the glass transition temperature, the better the coating properties are in terms of crackling. The latter is shown in the Tables of the examples.

The phenomenon of brittleness of plastic films below their glass transition temperature is well known in polymer chemistry, and the resulting increased crackling risk of coatings on cheese under mechanical stress is a logical consequence.

Although the glass transition temperature of the reference coating (which is measured in the dry state) is relatively high, crackling is not a problem. This is due to the hydroplasticity effect. The conventional PVOH-stabilised copolymer of vinyl acetate and dibutyl maleinate which forms the basis of the reference coating is able to take up a significant amount of water when present as a dried film on the cheese. By the water uptake, the effective glass transition temperature drops to a level where crackling is not a serious problem.

The low vapour coating compositions according to the present invention are less susceptible to water uptake. Therefore, hydroplastization of the film will occur to a lesser extent and the glass transition temperature of the (dry) film should be below the storage temperature of the cheese to prevent crackling.

As a result, for optimal coating properties in terms of crackling, within the composition range mentioned above, the content of the maleic or fumaric ester, and in particular the dibutyl maleate content should be higher than about 40%, and preferably higher than 45%. The upper range of dibutyl maleate content is not very critical and in fact only determined by the polymerisation thermodynamics.

The copolymer component of the coating composition according to the present invention generally has a glass transition temperature of less than 18°C, preferably less than 15°C, and most preferably less than 13°C.

Although the inventors do not wish to be bound to any theory they believe that the low water vapour permeability of the coating compositions according to the present invention can be attributed to the relatively low content and/or low molecular weight of PVOH stabiliser as compared with a reference coating such as CESKA WL. This would result in the formation of a more closely packed film, which is less penetrable for water.

Indeed, the low content and/or low molecular weight of PVOH stabiliser also gives rise to the remarkably high solid matter content of the coating at a relatively low viscosity. Practically, for these reasons, the solid matter content of the low vapour coating compositions according to the present invention will generally range between 42 and 60% (Brookfield viscosity between 10 and 150 Poise), more preferably between 48 and 55% (Brookfield viscosity between 20 and 80 Poise). As a comparison, the CESKA WL reference coating has a viscosity of >180 Poise at a solid matter content of 48%.

The inventors have also surprisingly found that although the water vapour permeability does not significantly depend on dibutyl maleinate content, the reduction of evaporative water loss on cheese surprisingly depends very much on this parameter. The higher the dibutyl maleinate content of the copolymer, the lower the evaporative water loss of the cheese during ripening. Although the inventors do not wish to be bound to any theory, the mechanism is most likely that the higher the dibutyl maleinate content of the copolymer, the more hydrophobic the film, the lower the affinity for water and the higher the effective water barrier when present on cheese.

Therefore, also for this respect, an optimal water barrier is obtained when, within the composition range mentioned above, the dibutyl maleate content is higher than about 40%, and preferably higher than 45%.

As stated above, the preferred coating compositions according to the present invention include one or more additional ingredients, such as Mowilith SSK 1 KL or Mowilith 4230 KL. A typical preferred coating composition is composed of the following ingredients in the following ranges: a low vapour coating composition as described in Example 2.3 below, admixed with 0.1 to 75%, preferably 10 to 50% of the commercially available base dispersion Mowilith SSK 1, and including one or more optional ingredients on top (such as natamycin, a colorant, additional water, etc.). For calculation of mixing ranges, solid matter contents of 52% and 48% have been assumed for low vapour coating composition and commercially available base coating composition, respectively.

The new coating compositions according to the present invention provide an 5 excellent coating on cheese, in particular hard and semi-hard cheeses, with better film-forming properties than conventional coatings which are employed for the same purposes. Besides, they fully comply with Dutch Warenwet and German BFR XIV recommendation.

Admixing a base coating composition according to the present invention with a commercially available coating composition such as Mowilith SSK 1 KL or Mowilith SDM 4230 KL in the amounts indicated above results in a mixed low vapour coating composition which when appied on cheese generally exhibits better resistance against crackling.

As is well known in the art, an important requirement for the application of coatings on cheese using cheese coating machines, such as those of the PLASTIMA range produced by Doeschot, Alkmaar, the Netherlands, is that the coatings should have a viscosity of typically 5 between 20 and 80 Poise, more preferably between 30 and 60 Poise. A lower viscosity would result in unacceptable losses of coating due to run off from the machine and from the cheese, as well as in cleaning problems of the machine. The low vapour coatings disclosed herein have Brookfield viscosities which lie within the preferred range of 30-60 Poise, or can be diluted with a few percent of water to lower the viscosity down to within the preferred range, making them perfectly suitable for automated application. The addition of water (as well as some colorants and preservatives) is a common procedure for producing tailor-made coatings having a certain desired viscosity.

The coating composition according to the present invention may also contain a fungicide. Suitable fungicides include, for example, natamycin and potassium sorbate. The effective and preferred amounts primarily depend on the specific substance to be used. Generally an amount up to 5% will be sufficient, in particular an amount in the range of 2-3%, and preferably about 2.5%. In the case of natamycin, however, the amounts to be used are usually considerably smaller and they may vary from about 1 to 5000 ppm (= 0.5 wt.%), preferably from 1 to 750 ppm, more preferably from 50 to 500 ppm. As it is a rather expensive 0 ingredient, it is important that natamycin activity is not lost during storage of the cheese coating, i.e. that the stability of natamycin in the coating should be high.

The stability of natamycin in the low vapour coatings of the current invention during storage (at pH 4.5-4.8) is equal to those of commercial coatings such as CESKA WL and superior to low vapour coatings LDM 1481 and LDM 1851 disclosed in PCT/EP 03/05841. For example, when a cheese coating containing natamycin is stored at 40 °C for 1 week, less than 60% of the original amount of natamycin can be recovered for the preferred coatings in PCT/EP 03/05841, whereas more than 85% of the orginal amount of natamycin can still be found in the low vapour coatings of this invention or in CESKA WL. (Determination of natamycin content in coating dispersion by sonication of coating dispersion with 50-100 parts of methanol, followed by filtration over a 0.45 μm Minisart filter and HPLC analysis of the methanol fraction).

Because less moisture migrates between the cheese and the wooden shelves, as can be determined using commercially available sword-shaped sensors for relative humidity (e.g. Hygroclip HS 28 sword sensor coupled to Hygrolog-D data logger, both of Rotronic GmbH, Ettlingen, Germany), the relative humidity under the cheeses is lower when using the coatings of the current invention as compared with cheeses treated using CESKA WL. Thus, even when natamycin stability is comparable, the use of the coatings disclosed herein over traditional cheese coatings such as CESKA WL already results in reduced growth of moulds and yeasts under and on the cheese (keeping all other factors constant such as natamycin content in the coating, moisture content of the cheese, etc.).

An extremely important advantage of the use of the coatings described herein as compared with commercially available cheese coatings based on copolymers of vinyl acetate and dibutyl maleate such as CESKA WL is the virtual absence of any tack phenomena. This is illustrated in the examples (see below). When using the traditional coating systems such as used in CESKA WL, care has to be taken in preventing side-on collisions of cheeses during transportation on conveyor belts within the cheese production and ripening facility. Side-on collisions may lead to damage of the coating of the cheese. During the collision, the adjacent sides of the colliding cheeses are sticking together; when the cheeses are pulled apart, some of the dried film is transferred from one cheese to the other, leaving a hole in the protective coating of one of the cheeses. Moreover, the coated cheeses are sometimes piled on top of each other. This happens during transportation in trucks from one facility to the other, or when the cheeses are waiting to be cut in pieces and sold in a supermarket or other retail channel. During piling, tack between cheeses can occur, resulting in damage of the protective coating when taking the cheeses off the pile. Such risks are minimised when using the coatings of the current invention.

The relatively high solid matter content of the low vapour coating compositions according to the present invention results in faster drying of the coating on the cheese. Indeed, as a typical example, the drying speed of a cast film increases from CESKA WL 200.03.45 (solid matter content 42%, Brookfield viscosity 45 P) to a typical low vapour coating described in this invention (solid matter content 51 %, Brookfield viscosity 45 P) to a typical ethylene-vinyl acetate based low vapour coating disclosed in PCT/EP 03/05841 (Mowilith LDM 1481: solid matter content 53%, Brookfield viscosity 8 Poise). As a result of the faster drying process, better film formation is obtained for (both Mowilith LDM 1481 and) the low vapour coatings according to the present invention, as compared with the state of the art, giving a dryer and less tacky film surface.

Finally, the formation of blisters between coating and cheese wax is strongly suppressed. Blisters under the paraffin are unwanted not only for esthetical reasons; besides, they are spots where mould growth can start. In addition, bad adhesion between paraffin and cheese coating is a strong negative in the process where cheese wheels are cut into pieces which are subsequently pre-packed and shipped to the retail channel. It is believed that the relatively high water barrier of the low vapour coatings is for a good part responsible for the the suppression of blisters between coating and paraffin.

Importantly, although the coating according to the present invention regulates moisture loss from the cheese, the ripening process is not negatively influenced. Dispersions of these improved barrier coating materials can be applied according to a procedure similar to the coating protocol for currently used dispersions such as CesKa®-coAt WL mentioned above.

As an additional advantage, by using the coating dispersions disclosed herein, a less thick rind of the cheese will be formed as compared with cheeses treated with known dispersions such as CesKa®-coAt WL. This provides an advantage with regard to the perceived texture of the cheese.

The pH of the composition is suitably in the range of 3.5-6.0. However, a pH of 5 or lower and in particular of about 4.8 is generally preferred, since the storage life of the composition is thereby increased. Such a pH can be advantageously adjusted by the addition of a suitable acid, for example hydrochloric acid and/or acetic acid, or the use of a suitable buffer solution.

As a general rule, the components to be used for the composition according to the invention are selected in such a way that they do not interfere with each other, i.e. they will not adversely affect the characteristics of the composition. In actual practice this will hardly result in any significant restrictions.

If desired, the coating according to the invention may be given an appropriate shine after its application to the substrate and drying. In contrast, the surface of the coating may also optionally be made mat, for example by admixing cellulose or bamboo fibers or the like (preferably having a particle size of >1µm) to the coating composition before the composition is applied on the cheese or, alternatively, treating the coated cheese with acetic acid, said methods being known to people skilled in the art.

The coating composition according to the invention preferably has a viscosity (Brookfield LVT, sp. 4, RT) of 10-300 Poise, more preferably 20-250 Poise and most preferably 30-60 Poise. The dry solids content generally is in the range of 40-60%, and preferably of 45-55%, and most preferably of 49-53%.

As an alternative embodiment for the preparation of the coating composition according to the invention the sequence of some steps can be changed.

The ready-for-use compositions can be suitably stored for a longer period of time, from several days up to some 6 months, at a temperature of 10-20°C, preferably 10-15°C, and more preferably at 13°C, such as in a cheese store, before it is used.

The coating composition according to the invention is generally applied to the desired product at a temperature of between 10-30°C, and the product is then dried. In general, the composition can be applied at any suitable point in time, as is the case now with state of the art compositions. The application may occur manually or mechanically in a way which is well known to a person skilled in the art. Drying generally occurs in the air, but ma also be accelerated, if desired. Optionally an after-treatment of the product may take place, for example to reinforce its mechanical properties or to embellish its appearance. These steps are all known as such and will therefore not be discussed in detail. If a coating composition comprising a base coating of a copolymer (e.g. the terpolymer as defined above), polyvinyl alcohol and a nonionic emulsifier and possible further additives in admixture with a commercially available product, such as Mowilith SSK-1 KL or Mowilith SDM 4230 KL is used, which is a preferred embodiment of the present invention, this total composition can either be applied on the cheese in a previously mixed form or as separate compositions (i.e. the base coating composition with possible additives and at least one commercially available composition or separate ingredients thereof) in consecutive order.

The invention further relates to the use of a coating composition according to the present invention, as described above, in the manufacturing or rather conservation of cheese, both on semi-hard and hard cheese, such as Gouda cheese, Maasdam cheese, Edam cheese, Emmental cheese, Gruyere cheese, Parmesan cheese and Cheddar cheese, and can also be used on soft cheese, such as most French cheese and 'schmier' cheese. The cheese on which the composition according to the invention is applied may be of any source, for example cheese made from cow milk, goat milk, sheep milk, etc., or mixtures thereof.

The invention is further illustrated by the following examples which are not to be construed as limiting the invention in any respect. The low vapour coating compositions according to the invention are prepared substantially as described by a protocol mentioned in the Celanese DE application. The percentages in this specification are percentages by weight, unless stated otherwise. Commercially available cheese coatings based upon vinyl acetate - dibutyl maleinate copolymers have been obtained from CSK Food Enrichment BV, Leeuwarden, the Netherlands. A typical product code is CesKa®-coAt WL xxx.yy.zz, wherein xxx relates to the content of natamycin in ppm; yy relates to the concentration of a yellow dye, Annatto, and zz is the Brookfield viscosity (determined at room temperature using a Brookfield LVT viscosimeter, spindle 4).

Example 1

A Dutch cheese, type Amsterdammer, produced by Frico Cheese (Oosterwolde, the Netherlands), having a fat content in the solid matter content of 48%, and having a nominal weight of 4.5 kg, is taken out of the brine bath and coated according to a coating protocol which is generally as follows:

Specifically, approximately 3 to 4 days after production, within a few hours after coming out of the brine, the cheeses are placed on wooden shelves, and by manual application (using a sponge) receive a thin coating layer on the top cylindric half of the cheese as well as on the sides. The amount of coating which is applied in one run ranges (on average) between 5 and 10 g (total weight basis). The coating is allowed to dry for between one to three days, the cheeses are turned on the shelves and the procedure is repeated until the cheeses reach an age of 29 days after production. More precisely, the coating scheme which was employed is as follows (turning of the cheese followed by half-side coating of the cheese): at 4, 7, 10, 13, 15, 17, 19, 22, 25 days after production. The storage conditions are controlled at a temperature of $13 \pm 1°C$ and at a relative humidity of $85 \pm 3\%$.

Cheese coating properties are determined at a cheese age of 15 days after production; the weight of the cheeses is determined at t = 0 days after brining and t = 25 days after brining; evaporative weight loss is determined as the difference in weight of the cheeses determined at t = 25 days and t = 0 days, corrected for the total amount of coating applied (on a solid matter basis).

Table 1.1

| Physical-chemical characteristics of the coating compositions used in Example 1 | | | | |
|---|---|---|---|---|
| Coating | Brookfield viscosity (Poise)[a] | Solid matter content (wt%)[b] | WVP (g/m$^2$.24h)[c] | $T_g$ (°C)[d] |
| Reference (WL 500.02.35) | 34 | 43,0 | 170-200 | 18-20 |
| Coating 1.1 | 48 | 52,5 | 85 | 17,4 |
| Coating 1.2 | 46 | 52,2 | 68 | 16,7 |

a) According to ISO 2555; Brookfield viscosimeter LVT, spindle 4, 30 rpm, 23 °C
b) According to ISO 1625.
c) Water Vapour Permeability coefficient, for determination see text below.
d) Glass transition temperature, measured according to DIN 53765.
Note pH of all coatings ranges between 4.5 and 5.0

Table 1.1 summarises physical-chemical characteristics of the coating compositions used. Table 1.2 summarises cheese coating properties and evaporative weight loss for cheeses treated with a reference coating (CesKa®-coAt WL 500.03.35, of CSK Food Enrichment BV, Leeuwarden, The Netherlands) as well as several low vapour coatings having the same natamycin content (500 ppm), colour strength (0.3% Annatto WS solution of CSK Food Enrichment BV, Leeuwarden, The Netherlands) and comparable Brookfield viscosity (45 +/- 5 Poise determined at room temperature using a Brookfield LVT, spindle 4, 30 rpm).

Table 1.2

| Comparision of several low vapour coating compositions with reference coating, evaluated for coating properties and evaporative water loss from Amsterdammer-type cheeses. | | | | | |
|---|---|---|---|---|---|
| Coating | Gloss[a] | Tack[b] | Crackling under stress[c] | Paraffin Adhesion[d] | Evaporative weight loss (wt. %) after 25 days |
| reference | good | good | good | average | 10.2 |
| Coating 1.1 | excellent | excellent | poor | good | 9.2 |
| Coating 1.2 | excellent | excellent | poor | good | 8.9 |
| Coating 1.2 mix[e] | excellent | excellent | fair | good | 8.9 |

a) Gloss is visually observed and evaluated by a panel of persons skilled in the art;

b) Tack is defined as the extent of adhesion of the cheeses on the wooden shelves, and evaluated by a panel of persons skilled in the art;

c) Crackling under stress is the extent of crackling of the coating when the cheese is dropped onto the floor from a height of 1 meter, as evaluated by a panel of persons skilled in the art;

d) paraffin adhesion is the absence of blisters between the coating and a layer of paraffin when the cheeses have reached an age of 85 days after production. The paraffin (Paradip Yellow B1, ex Paramelt, The Netherlands) is applied by a quick immersion of coated cheeses in liquid paraffin of 100 °C when the cheeses have an age of 25 days after brining (drying time after last coating treatment before paraffin treatment is 48 to 72 hrs). This parameter is scored by a panel of persons skilled in the art.

e) "mix" refers to a 80/20 (wt/wt) mixture of low vapour coating and Ceska WL 000.00.200, formulated to the specifications mentioned above.

Clearly, the invention demonstrates a well controlled reduction of evaporative water loss of cheese during ripening, by using low vapour coatings as compared to a reference coating type.

In addition, the composition containing 80 wt.% of low vapour coating 1.2 and 20 wt. % of reference coating, demonstrates the combination of the good properties of the coating types: control of evaporative water loss and improved crackling under stress.

Example 2

A Dutch Gouda cheese, produced by Frico Cheese (Oosterwolde, The Netherlands), having a fat content in the solid matter of 48%, and having a nominal weight of 4.5 kg, is taken out of the brine bath and coated according to a coating protocol as is commonly known to the person skilled in the art. Specifically, coming from the brine, the cheeses are placed on wooden shelves, and receive a thin coating layer on the top cylindric half of the cheese as well as the on the sides. The amount of coating which is applied in one run ranges (on average) between 5 and 10 g (total weight basis). The coating is allowed to dry for between one to three days, the cheeses are turned on the shelves and the procedure is repeated until the cheeses reach an age of 26 days after production. The storage conditions are controlled at a temperature of $13 \pm 1°C$ and at a relative humidity of $85 \pm 3\%$.

Table 2.1

| Physical-chemical characteristics of the coating compositions used in Example 2. | | | | |
|---|---|---|---|---|
| Coating | Brookfield viscosity (Poise)[a] | Solid matter content (wt%)[b] | WVP (g/m$^2$.24h)[c] | $T_g$ (°C)[d] |
| Reference (WL 500.02.35) | 37 | 42,8 | 170-200 | 18-20 |
| Coating 2.1 | 48 | 52,2 | 54 | 14,9 |
| Coating 2.2 | 53 | 52,0 | 73 | 12,0 |

a) According to ISO 2555; Brookfield viscosimeter LVT, spindle 4, 30 rpm, 23 °C.

b) According to ISO 1625.

c) Water Vapour Permeability coefficient, for determination see text below.

d) Glass transition temperature, measured according to DIN 53765. N.B. pH of all coatings ranges between 4.5 and 5.0

Table 2.1   (continued)

| Physical-chemical characteristics of the coating compositions used in Example 2. | | | | |
|---|---|---|---|---|
| Coating | Brookfield viscosity (Poise)[a] | Solid matter content (wt%)[b] | WVP (g/m$^2$.24h)[c] | $T_g$ (°C)[d] |
| Coating 2.3 | 49 | 51,9 | 63 | 10,9 |

a) According to ISO 2555; Brookfield viscosimeter LVT, spindle 4, 30 rpm, 23 °C.

b) According to ISO 1625.

c) Water Vapour Permeability coefficient, for determination see text below.

d) Glass transition temperature, measured according to DIN 53765. N.B. pH of all coatings ranges between 4.5 and 5.0

Cheese coating properties are determined at a cheese age of 26 days after production; the weight of the cheeses is determined at t = 0 days after brining and t = 26 days after brining; evaporative weight loss is determined as the difference in weight of the cheeses determined at t = 26 days and t = 0 days, corrected for the total amount of coating applied (on a solid matter basis).

Table 2.1 summarises physical-chemical characteristics of the coating compositions used. Table 2.2 summarises cheese coating properties and evaporative weight loss for cheeses treated with a reference coating (CesKa®-coAt WL 500.03.45, of CSK Food Enrichment BV, Leeuwarden, the Netherlands) as well as several low vapour coatings having the same natamycin content (500 ppm), colour strength (0.3% Annatto WS solution of CSK Food Enrichment BV, Leeuwarden, the Netherlands) and Brookfield viscosity (45 +/- 10 Poise determined at room temperature using a Brookfield LVT, spindle 4, 30 rpm).

Table 2.2

| Comparision of several low vapour coating compositions with reference coating, evaluated for coating properties and evaporative water loss from Gouda cheese. | | | | | |
|---|---|---|---|---|---|
| Coating | Gloss[a] | Tack on shelves[b] | Tack in piling[c] | Crackling (thumb)[d] | Evaporative weight loss (wt. %) after 26 days |
| reference | good | good | good | good | 6.7 |
| coating 2.1 | excellent | excellent | excellent | fair | 5.6 |
| coating 2.1 mix[e] | excellent | excellent | excellent | fair | 5.9 |
| coating 2.2 | excellent | excellent | excellent | fair | 5.4 |
| coating 2.2 mix[e] | excellent | excellent | excellent | fair | 6.0 |
| coating 2.3 | excellent | excellent | excellent | good | 4.9 |
| coating 2.3 mix[e] | excellent | excellent | excellent | excellent | 5.4 |

a) Gloss is visually observed and evaluated by a panel of persons skilled in the art;

b) Tack on shelves is defined as the extent of adhesion of the cheeses on the wooden shelves, and evaluated by a panel of persons skilled in the art;

c) Tack in piling is defined as the extent of adhesion between touching cheese surfaces when piled four cheeses high for 4 hours at 13°C and 83% RH, as evaluated by a panel of persons skilled in the art;

d) Crackling (thumb) is the extent of crackling of the coating occurring when a person skilled in the art firmly and quickly presses his thumb into the cheese surface, and as evaluated by a panel of persons skilled in the art;

e) "mix" refers to a 75/25 (wt/wt) mixture of low vapour coating and Ceska WL 500.03.200, respectively, formulated to the following specifications: solid matter content = 50 - 52 wt% and Brookfield viscosity = 45 - 55 Poise for all "mix" samples.

The procedure for determining the WVP coefficient is as follows. A polymer film having a thickness of approx 300 μm is prepared by casting a diluted dispersion (solid contents approx 14 wt%) into a shallow metal dish. To faciliate loosening of the film, the metal dish is covered with a layer of poly(ethylene) foil. After drying of the dispersion for 2-3 days, the film is loosened from the foil, and circular cuts having a radius of 30 mm are made from the film. Duplicate slices of polymer film are first conditioned in a climatised room (T = 23 °C; RH = 50%) and then sealed to the open mouth of a glass test dish containing 10 g of demineralised water. The weight of the resulting assemblies is determined immediately after sealing and after storage in a climatised room at T = 23 °C and RH = 50% for seven days; the weight difference after 7 days is caused by diffusion of water vapour through the polymer film.

The water vapour permeability (WVP) is determined as follows:

$$\text{WVP} = \frac{\Delta m\,(7)}{\text{SA x time}} \qquad \left[\frac{g}{m^2\ d}\right]$$

wherein:

$\Delta m\,(7)$ is the evaporative weight loss due to diffusion of water from the test dish through the polymer film after 7 days, as determined by the weight of the sealed test dish after 7 days minus the weight of the sealed test dish immediately after sealing (i.e. at t = 0 days), expressed in g; SA is the surface area of the exposed polymer film (in $m^2$); time is the duration of the experiment, which is 7 days in our experiments. The obtained WVP value applies to a polymer film having a thickness of 300 $\mu$m.

Clearly, the invention demonstrates a well controlled reduction of evaporative water loss of cheese during ripening, by using low vapour coatings as compared to a reference coating type.

Interestingly, the phenomenon of crackling as observed using the "thumb test" can be reduced by lowering the glass transition temperature to the temperature of the ripening cell (i.e. the temperature of the coating). Under these conditions, the risk of deformation of the coating resulting in a brittle breaking of the coating is reduced.

Surprisingly, the composition containing 75 wt.% of low vapour coating 2.3 and 25 wt. % of reference coating has the best overall performance (good barrier properties and excellent overall coating properties), with even improved crackling behaviour as compared with coating 2.3. This demonstrates the versatility of the invention: obtaining control of evaporative water loss and excellent crackling under stress by using tailor-made mixtures of low vapour coatings with traditional cheese coating dispersions.

Finally, the overall results show that the invention not merely discloses enhanced coating barrier properties but also a much better overall performance profile of the cheese coating as compared with the state of the art: improved gloss, reduced tack to shelves and between cheeses in piling, and superior paraffin adhesion.

## Claims

1. Use of a coating composition which comprises a water-borne polymer dispersion comprising (a) a copolymer comprising a vinylic ester of a saturated hydrocarbon, at least one of a maleic or fumaric ester, and a stabilising monomer, (b) a protective colloid, and (c) a nonionic emulsifier, said composition having a water vapour permeability ranging from 1-140 $g/m^2$.24h, in the manufacture and/or ripening of cheese.

2. Use of a coating composition according to claim 1, wherein the vinylic ester of a saturated hydrocarbon is vinyl acetate, the maleic ester is dibutyl maleinate or di-2-ethylhexyl maleinate, and the stabilising monomer is mono-2-ethylhexyl maleinate

3. Use of a coating composition according to claim 1 or claim 2, wherein the protective colloid is polyvinyl alcohol.

4. Use of a coating composition according to any one of claims 1-3, wherein the water vapour permeability is less than 100 $g/m^2$.24h, preferably less than 75 $g/m^2$.24h.

5. Use of a coating composition according to any one of claims 1-4, further comprising a commercially available coating composition Mowilith SSK-1 KL or Mowilith SDM 4230 KL, or one or more individual ingredients thereof.

6. Use of a coating composition according to any one of claims 1-5, wherein dibutyl maleinate is present in an amount of more than 40% by wt., preferably more than 45% by wt. taken on the total weight of the copolymer component.

7. Use of a coating composition according to any one of claims 1-6, wherein said copolymer has a glass transition temperature of less than 18°C, preferably less than 15°C, and most preferably less than 13°C.

8. Use of a coating composition according to any one of claim 5, wherein the commercially available coating composition Mowilith SSK-1 KL or Mowilith SDM 4230 KL, or one or more individual ingredients thereof, is present in an amount of 0.1 to 75% by wt., preferably 10 to 50% by wt. taken on the total weight of the coating composition.

9. Use of a coating composition according to any one of claims 1-8, wherein the solid matter content is between 42 and 60% by wt., preferably between 48 and 55% by wt.

**10.** Cheese provided with a cheese coating, wherein said cheese coating is essentially made of a coating composition as defined in any one of claims 1-9.

**European Patent Office**

## EUROPEAN SEARCH REPORT

Application Number

EP 03 07 8790

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E,D | WO 03/101214 A (CSK FOOD ENRICHMENT B V ;KEVELAM J (NL); VAN BOVEN A (NL); KOOPMAN) 11 December 2003 (2003-12-11) * the whole document * | 1-10 | A23C19/14 A23C19/16 |
| A | EP 0 964 026 A (PROCTER & GAMBLE) 15 December 1999 (1999-12-15) * the whole document * | | |
| A | WO 01/05240 A (BEL FROMAGERIES ;IMBERT ANNIE (FR); CHASSAGNE MARIE HELENE (FR)) 25 January 2001 (2001-01-25) * the whole document * | | |
| A | EP 0 403 030 A (PARAMELT SYNTAC BV) 19 December 1990 (1990-12-19) * the whole document * | | |
| A,D | WO 01/80658 A (CSK FOOD ENRICHMENT B V ;HOVEN GERBRAND ANTONIUS V D (NL); SMEGEN) 1 November 2001 (2001-11-01) * the whole document * ----- | | |

| | TECHNICAL FIELDS SEARCHED (Int.Cl.7) |
|---|---|
| | A23C |

The present search report has been drawn up for all claims

| Place of search | Date of completion of the search | Examiner |
|---|---|---|
| MUNICH | 30 April 2004 | Adechy, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 07 8790

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2004

| Patent document cited in search report | | Publication date | Patent family member(s) | | Publication date |
|---|---|---|---|---|---|
| WO 03101214 | A | 11-12-2003 | WO | 03101214 A1 | 11-12-2003 |
| EP 0964026 | A | 15-12-1999 | EP | 0964026 A1 | 15-12-1999 |
| | | | AU | 756083 B2 | 02-01-2003 |
| | | | AU | 3842299 A | 30-12-1999 |
| | | | AU | 4338199 A | 30-12-1999 |
| | | | BR | 9911105 A | 06-03-2001 |
| | | | CA | 2332917 A1 | 16-12-1999 |
| | | | CA | 2332980 A1 | 16-12-1999 |
| | | | CN | 1305508 T | 25-07-2001 |
| | | | EP | 1086171 A1 | 28-03-2001 |
| | | | EP | 1086165 A1 | 28-03-2001 |
| | | | WO | 9964505 A1 | 16-12-1999 |
| | | | JP | 2004503606 T | 05-02-2004 |
| | | | JP | 2002517586 T | 18-06-2002 |
| | | | WO | 9964499 A1 | 16-12-1999 |
| | | | US | 6498201 B1 | 24-12-2002 |
| | | | US | 6495612 B1 | 17-12-2002 |
| WO 0105240 | A | 25-01-2001 | FR | 2796521 A1 | 26-01-2001 |
| | | | AU | 6164400 A | 05-02-2001 |
| | | | CA | 2375971 A1 | 25-01-2001 |
| | | | CN | 1361665 T | 31-07-2002 |
| | | | CZ | 20020205 A3 | 15-05-2002 |
| | | | EP | 1202634 A1 | 08-05-2002 |
| | | | WO | 0105240 A1 | 25-01-2001 |
| | | | HU | 0202349 A2 | 28-11-2002 |
| | | | JP | 2003504086 T | 04-02-2003 |
| | | | NZ | 516713 A | 31-10-2003 |
| | | | PL | 352679 A1 | 08-09-2003 |
| | | | SK | 442002 A3 | 04-06-2002 |
| EP 0403030 | A | 19-12-1990 | NL | 8901816 A | 01-02-1991 |
| | | | AT | 99494 T | 15-01-1994 |
| | | | DE | 69005710 D1 | 17-02-1994 |
| | | | DE | 69005710 T2 | 23-06-1994 |
| | | | DK | 403030 T3 | 11-04-1994 |
| | | | EP | 0403030 A1 | 19-12-1990 |
| | | | ES | 2062300 T3 | 16-12-1994 |
| WO 0180658 | A | 01-11-2001 | NL | 1014877 C2 | 15-10-2001 |
| | | | AU | 6793101 A | 07-11-2001 |
| | | | EP | 1299004 A2 | 09-04-2003 |
| | | | WO | 0180658 A2 | 01-11-2001 |

EPO FORM P0459

For more details about this annex : see Official Journal of the European Patent Office, No. 12/82